Europäisches Patentamt

European Patent Office

Office européen des brevets

(11) Veröffentlichungsnummer : **0 117 881 B1**

## EUROPÄISCHE PATENTSCHRIFT

(45) Veröffentlichungstag der Patentschrift : 18.06.86

(21) Anmeldenummer : 83102046.6

(22) Anmeldetag : 03.03.83

(51) Int. Cl.⁴ : **B 63 H 21/20**, B 63 H 5/08, B 63 H 25/42, B 63 J 3/02

(54) Schiffspropulsionsanlage mit einem Haupt- und einem Zusatzpropeller.

(43) Veröffentlichungstag der Anmeldung :
12.09.84 Patentblatt 84/37

(45) Bekanntmachung des Hinweises auf die Patenterteilung : 18.06.86 Patentblatt 86/25

(84) Benannte Vertragsstaaten :
FR GB IT NL SE

(56) Entgegenhaltungen :
DE-A- 1 613 829
DE-A- 3 207 398
GB-A- 2 038 747
US-A- 3 938 464
US-A- 4 114 555
SCHIFF UND HAFEN, Band 18, Nr. 12, 1966, Seiten 835-836, Hamburg, DE; Prof. Dr.-Ing. O. GRIM: "Propeller und Leitrad"

(73) Patentinhaber : **Licentia Patent-Verwaltungs-GmbH**
**Theodor-Stern-Kai 1**
**D-6000 Frankfurt/Main 70 (DE)**

(72) Erfinder : **Kranert, Klaus, Dr. Ing.**
**Wittenbergener Weg 9**
**D-2000 Hamburg 56 (DE)**
Erfinder : **Rechtenbach, Harald**
**Böhmkenstrasse 22**
**D-2000 Hamburg 11 (DE)**

(74) Vertreter : **Lertes, Kurt, Dr. et al**
**Licentia Patent-Verwaltungs-GmbH Theodor-Stern-Kai 1**
**D-6000 Frankfurt/M 70 (DE)**

**Beschreibung**

Die Erfindung betrifft eine Schiffspropulsionsanlage mit den Merkmalen des Oberbegriffs der unabhängigen Ansprüche 1, 2 und 3.

Die Energieeinsparung im Schiffsbetrieb beschränkt sich nicht nur auf die Haupt- und Hilfsmaschinen, es gibt auch seit Jahren Versuche, den Propulsionswirkungsgrad von Schiffspropellern zu verbessern. Ein Ansatz hierzu ist, die « Drallenergie » des aus dem Propeller austretenden Wasserstrahls für die Schubgewinnung nutzbar zu machen und den Gesamtpropellerwirkungsgrad, der bei 60-70 % liegt, zu erhöhen. Aus den Entwicklungen ist ein sogenanntes Leitrad siehe Schiff und Hafen, Band 18 Nr. 12, 1966, Seiten 835-836 entstanden, das einen passiven Propeller darstellt, der als Kontrapropeller hinter dem Hauptpropeller angeordnet ist und durch entsprechende Auslegung je nach Schiffstyp einen Schubgewinn von ca. 3 bis 18 % erbrachte (3 % für ein sehr völliges Schiff). Obwohl diese Ergebnisse bereits 10 Jahre zurückliegen, wurde lediglich das Forschungsschiff « Gauß » mit einem Leitrad ausgerüstet und es wurden gute Ergebnisse erzielt. (Vergl. Berichte der 10/69 und 22/71, « Forschungszentrum des deutschen Schiffbaus »).

Obwohl die Brennstoffkosten stetig steigen, hat das Leitrad zur Energieeinsparung bisher keinen Eingang in den Schiffbau gefunden. Da das Leitrad leichtgängig sein muß, ist ein Pendelrollenlager eingesetzt worden, das im Seewasser hinsichtlich der Wartung nicht unproblematisch ist. Die dicht hintereinander laufenden Propeller sind ferner nicht problemlos, da sie durch das Eindringen von Fremdkörpern (Stahltrosse, Eisschollen und Verunreinigungen) blockiert werden können.

Ein hinter dem Hauptpropeller angeordneter unabhängig angetriebener Kontrapropeller ist aus US-A-3 938 464 bekannt und dient der Verminderung der Drallverluste.

Es sind auch Aktivruder seit langem von der Klassifikationsgesellschaft und den Reedern akzeptiert worden. Sie dienten als Manövrierhilfen und wurden fast ausnahmslos vom elektrischen Fahrnetz gespeist. Durch die Einführung des Querstrahlruders sind sie mehr und mehr verdrängt worden. Die Aktivruder wurden außer als Manövrierhilfen auch als Tandemmotor mit bis 11 % der Gesamtleistung bei konstanter Drehzahl (Optimum 600 l/min) als Kontrapropeller der eingangs genannten Gattung eingesetzt.

Durch Ausbildung des Unterwassermotors als Propulsionsbirne (Entwirbelung des Propellerstrahls), durch die positive Beeinflussung von Sog, Nachstrom und Schubbelastungsgrad des Propellers durch das Aktivruder wurden ohne Optimierung von Leistungsanteil, Drehzahl, Anordnung, Durchmesser, Düsenausbildung und Steigung des Ruderpropellers eine Gesamt-Leistungsersparnis von bis zu 2,5 % erbracht.

Ein Asynchron-Motor wurde dabei mit einem üblichen Widerstandsläufer ausgelegt, um hohe Anlaufmomente bei geringen Anfahrströmen zu haben, was einem schlechten Wirkungsgrad bei Nennbetrieb entspricht.

Das Aktivruder wurde fast ausschließlich bei Elektro-Motorschiffen eingesetzt, da die Bordnetzenergie nicht ausreichte.

Die der Erfindung zugrundeliegende Aufgabe ist darin zu sehen, eine Anlage der eingangs erwähnten Art zu schaffen, die keinerlei Rückwirkung auf das Hauptantriebsystem, aber den Effekt des Schubgewinnes hat.

Diese Aufgabe wird durch die im Kennzeichen des Anspruchs 1 angegebenen Merkmale gelöst.

Weitere Lösungen dieser Aufgabe sind in den Ansprüchen 2 und 3 enthalten. Weiterbildungen der Erfindung sind in den Unteransprüchen gekennzeichnet.

Die mit der Anlage nach der Erfindung erzielten Vorteile werden darin gesehen, daß der vordere Propeller entlastet wird und deren Kavitationsproblem verringert werden. Es ist zu erwarten, daß der Abstand beider Propeller bis auf den Propellerdurchmesser erweitert werden kann, da er dann den Strahlkontraktions-Konus überschreitet und nicht nur einen Schubgewinn aus den Drallverlusten erhält, sondern auch weitere Wassermassen erfaßt. Dabei soll der Propellerteil innerhalb des Konus als Turbine arbeiten, um die Strahlverluste auszunutzen, während der Propellerteil ausserhalb des Konus den Schub erzeugt (aktives Leitrad). Das Aktivruder wird bei diesem Abstand vom Hauptpropeller auch seine bisherige Aufgabe als Querstrahlruderersatz (Ruderwinkel bis 90°) erfüllen können. Wird erreicht, daß das Aktivruder dauernd mit dem Hauptmotor mitläuft, bei einem guten Übertragungswirkungsgrad, so kann es bei Ruderwinkeln von 35° bei ca. 60 %, von 30° bei 50 % seines Durchmessers vor dem Ruderschaft laufend an den Propeller herangebracht werden.

Der optimale Abstand des Kontrapropellers im Hinblick auf optimalen Propulsionsgewinn muß berechnet bzw. durch Modellpropulsionsversuche ermittelt werden.

In der Zeichnung sind Ausführungsbeispiele nach der Erfindung dargestellt.

Es zeigen

Figur 1 eine Anlage mit Aktivruder,

Figur 2 eine solche mit einem Ruderpropeller,

Figur 3 eine Anlage mit zusätzlichem Stromerzeugungsaggregat für Revier- und Hafenfahrt,

Figur 4 eine Anlage zur Versorgung eines Heck- und eines Querstrahlantriebs,

Figur 5 eine Darstellung der auf das Schiff einwirkenden Längs- und Querkomponenten.

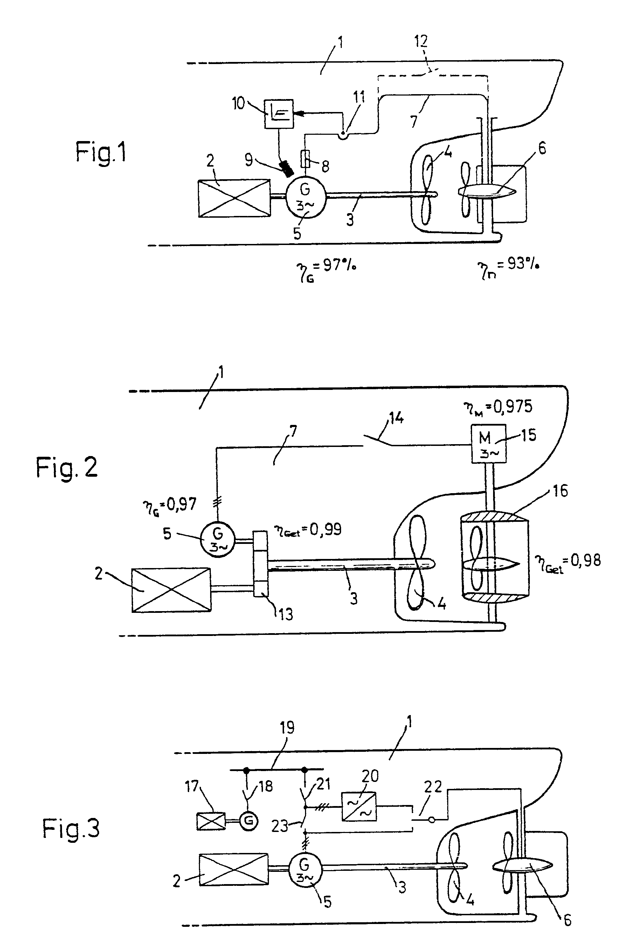

In Fig. 1 ist der hintere Teil eines Schiffes 1 mit einer Hauptmaschine 2 (Dieselmotor, Dampfturbine) dargestellt, an deren Stirnseite unmittelbar oder im Wellenstrang 3 mit dem Hauptpropeller 4 ein Synchronwellengenerator 5 vorgesehen ist.

Die elektrische Leistung des Generators entspricht in etwa der Leistung des Motors des Ruderpropellers 6. Dieser wird über eine Leitung 7 und eine Sicherung 8 aus dem Generator 5 versorgt. Die Erregerwicklung 9 des Wellengenerators ist über einen Begrenzungsbaustein 10 und einen Wandler 11 an die Leitung 7 angekoppelt.

In Abhängigkeit des Fahrkommandos wird vor dem Anlassen « voraus » oder « zurück » der Hauptmaschine 2 der Generator 5 stoßerregt und der Ruderpropeller 6 immer synchron zum Hauptpropeller 4 angefahren, wobei nach Hochlauf eine U/f = Konst.-Regelung erfolgt (elektr. Welle). Es ist nur ein Kurzschlußschutz durch Sicherungen 8 und eine Überlast-Überwachung durch den Begrenzerbaustein 10 vorzusehen, die im Störungsfall den Generator 5 entregt. Die Drehzahl des Ruderpropellers 6 ist somit immer proportional und entgegengesetzt der des Hauptpropellers 4. Es wird damit bei Teillast wie auch bei Rückwärtsfahrt eine optimale Propulsionsverbesserung erzielt.

Es kann auch ein Schalter 12 in der Leitung 7 (gestrichelt eingezeichnet) vorgesehen sein. Nach Starten der Hauptmaschine 2 und Fahrtaufnahme des Schiffes wird der frei laufende Asynchronmotor des Ruderpropellers 6 nach Stoßerregung des Generators 5 aus seiner Schleppdrehzahl nach Einlegen des Schalters 12 hochgefahren.

In dem Beispiel nach Fig. 2 wird von der Hauptmaschine 2 über ein Getriebe 13 die Welle 3 mit dem Hauptpropeller 4 und der Wellengenerator 5 angetrieben.

Von dem Wellengenerator wird über eine Leitung 7 mit einem Schalter 14 ein normaler Synchronmotor 15 versorgt, der in V-Bauart über nicht dargestellte Winkelgetriebe einen Ruderpropeller 16 antreibt.

Der Motor 15 und der Generator 5 werden vor dem Starten der Hauptmaschine 2 stoßerregt und der Schalter 14 bei Erreichen von ca. 6-8 % $U_N$ in Abhängigkeit der Lage des Polradwinkels von Motor und Generator zugeschaltet, d. h., aufsynchronisiert und damit der Ruderpropeller 16 hochgefahren.

Für das Umsteuern beim Notstopp bleibt der Schalter 14 geschlossen (bei Stoßerregung bei der Maschinen) — alternativ wird der Schalter bei kleiner Vorausdrehzahl geöffnet und in Abhängigkeit der Polradwinkel bei Generatordrehzahl ca. — 6 % wieder geschlossen.

Diese Lösung ist auch zum Starten (Fig. 1) nach dem Schleppverfahren der Asynchronvariante durchführbar. Dabei ist das Zuschalten bei höherer Drehzahl des Ruderpropellers (Schleppdrehzahl) auch in Abhängigkeit der Polradwinkellage mit Stoßerregung durchzuführen.

In Revier- und Hafenfahrt ist die verfügbare Bordnetzleistung durch zusätzliche Aggregate vergrößert. In Fig. 3 ist hierfür das Bordaggregat 17 vorgesehen, das über einem Schalter 18 des Bordnetz 19 speist. Bei Ausfall der Hauptmaschine und gefährlichem Seegang (Sturm) ist durch den aktiven Ruderpropeller 6 durch Speisung über einen Frequenzumsetzer 20 vom Bordnetz 19 aus die Möglichkeit gegeben, daß Schiff in eine ungefährliche Lage gegen die See zu manövrieren.

Bei langsam laufender oder stehender Hauptmaschine 2 ist der Frequenzumsetzer 20 einsetzbar, der für eine Teilleistung des Ruderpropellers 6 ausgelegt ist und vom Bordnetz über einen weiteren Schalter 21 und einen Umschalter 22 (obere Stellung) gespeist wird, während der Wellengenerator 5 mittels Schalter 23 abgeschaltet ist. Damit kann ein weiteres Querstrahlruder des Schiffes entfallen.

Ist bereits ein frequenzentkoppelter Wellengenerator für die Bordnetzversorgung vorhanden, so ist eine dauernde Bordnetzversorgung von der Hauptmaschine 2 möglich, wenn eine Schaltkupplung den Hauptpropeller 4 abgetrennt.

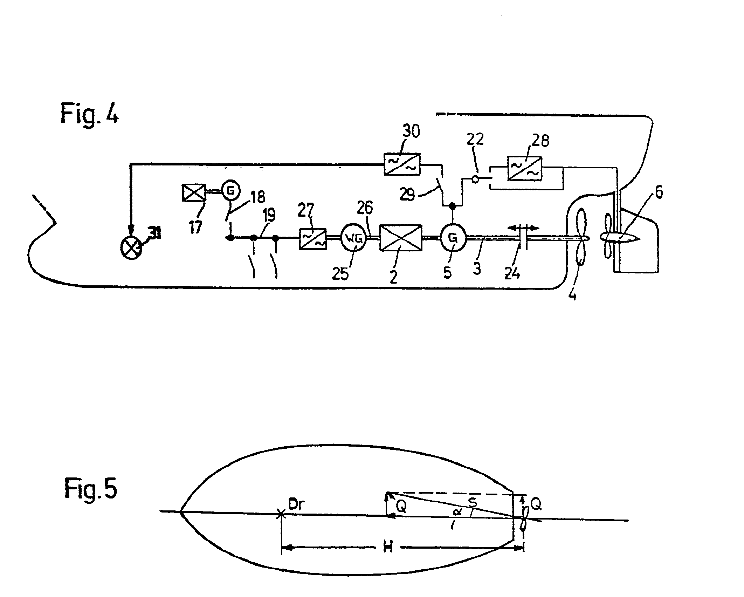

Damit ein Schiff frei von fremden Manövrierhilfen und von Pier zu Pier mit Wellengenerator-Bordnetzversorgung fahren und einen Bordnetzdiesel einsparen kann, ist eine mögliche Variante gemäß Fig. 4 einsetzbar. Im normalen Betrieb treibt die Hauptmaschine 2 die Welle 3 mit dem Wellengenerator 5 und über eine Schaltkupplung 24 den Hauptpropeller 4. Ein weiterer Wellengenerator 25 auf einer Welle 26 speist über einen Frequenzwandler 27 das Bordnetz 19, das im Hafenbetrieb von einem Bordnetzaggregat 17 über den Schalter 18 versorgt wird. Der Wellengenerator 5 ist ferner zur direkten Speisung des Antriebsmotors des Ruderpropellers 6 über Umschalter 22 (untere Stellung) vorgesehen.

Im Revier und im Hafen wird die Kupplung 24 geöffnet, der Umschalter 22 in die obere Stellung gelegt, sodaß der Wellengenerator 5 über einen Frequenzumsetzer 28 den Motor des Ruderpropellers 6 versorgt. Mit diesem Frequenzumwandler, der für die Ruderleistung (z. B. 20 % $P_N$) ausgelegt ist, kann der Synchronwellengenerator 5 bei Nenndrehzahl den Ruderpropeller 6 mit der erforderlichen Geschwindigkeit (z. B. hier 56 % $v_N$) antreiben. Durch Schließen eines weiteren Schalters 29 kann zum selbständigen Manövrieren parallel über einen weiteren Frequenzwandler 30 ein Bugstrahlruder 31 betrieben werden. Der Frequenzwandler 28 kann auch ggf. zum Starten des Ruderpropellers 6 bei ca. 50 % Drehzahl benutzt werden, indem man anschließend den Generator 5 zusynchronisiert.

Wird ein Verstellpropeller als Hauptpropeller verwendet, kann auch das Anfahren und Umsteuern des Ruderpropellers durch einem Frequenzwandler erfolgen, wobei die Sollsteigung des Hauptpropellers als Signal für die Drehrichtungsumkehr des Ruderpropellers dient.

Es ist auch möglich als Antriebsmotor für den Ruderpropeller einen Gleichstrommotor einzusetzen. Hierfür können zum Anfahren und zur Drehzahlregelung gesteuerte Gleichrichter in Anwendung kommen. Denkbar wäre auch, Dioden zu verwenden und die Synchronwellengeneratoren mit einer Spannungsregelung auszurüsten.

Als Ruderpropeller kommen die unterschiedlichsten Varianten infrage, die vom Fahrprofil und -typ des Schiffes abhängen : Propeller mit oder ohne Ringdüse im Ruderblatt, vor oder hinter dem Ruderschaft oder vor dem Ruderblatt ; Propeller in der Ruderdüse fest oder beweglich mit Düse ; mit oder ohne anhängendem Ruderblatt ; Propeller in separatem Steg fest zwischen Hauptpropeller und Ruder.

Eine allgemeine Lösung für gewöhnliche Seeschiffe sollte im Hinblick auf Energieeinsparung und Ruderwirkung-Verbesserung im Schleppkanal erprobt werden.

Es ist bekannt, daß Kontrapropeller bei Tropedos eine Erhöhung des Propulsionswirkungsgrades ebenso erbringen wie das eingangs erwähnte Leitrad. Bei der « Gaus » wurde ein Leistungsgewinn (Leitrad) von ca. 10 % erreicht.

Ausgehend von einem optimistischen 10 % $P_N$-Gewinn, bei einer Tandempropeller-Leistungs-Verteilung von 80 % : 20 %, ergibt sich nach Fig. 1 als Anlagenverlust $0.2 \times [(1 - \eta_M) + (1 - \eta_G)] = 0.2 [(1 - 0.93) + (1 - 0.9)] \sim 0.02 \stackrel{\wedge}{=} 2\%$.

Damit ergibt sich eine Gesamteinsparung von 8 %. Bei einer Anlage nach Fig. 2 ist die Einsparung ca. 8,3 %.

Bei einem pessimistischen 5 % Gewinn und einer Leistungsaufteilung von 90 % : 10 % ergibt sich :

Verluste : $0.1 \times 0.1 \stackrel{\wedge}{=} 1\%$
Leistungseinsparung = 4,0 %

Wird die Energiebilanz betrachtet, die durch die verbesserte Ruderwirkung beeinflußt wird, so sind zwei Phänomene zu unterscheiden :

a) Durch die Entwicklung des Propellerstrahls wird der Auftrieb des Ruderblattes erhöht und bei kleineren Ausschlägen des Ruders gleiche und schnellere Wirkung auf das gierende Schiff erreicht und der Ruderwiderstand vermindert,

b) Durch dem relativ großen Schub S im Ruder tritt bei Ruderlage eine Querkomponente auf $Q = S \sin \alpha$, während die Längskomponente (in Schiffslängsrichtung) $L = S \cos \alpha$ kaum geringer wird als der Schub S ($\alpha$ = wenige Grad). In Fig. 5 sind diese Verhältnisse dargestellt.

Die Querkomponente wirkt um den Drehpunkt Dr mit großem Hebelarm H und erzeugt ein zusätzliches erhebliches Drehmoment ($H \times Q$).

Die Kurschaltung, die bisher bei Seegang nur durch erhebliche Ruderwinkel bei deutlich großem Gierwinkel des Schiffes erfolgte, wird wesentlich verbessert und die Widerstandserhöhung des Schiffes durch die Schräganströmung des Ruderblattes kann bei dauerndem Tandembetrieb verbessert werden.

Hinzu kommt eine wesentliche Manövrierverbesserung bei kleinen Propellerdrehzahlen « voraus » und « zurück ».

**Patentansprüche**

1. Schiffs-Propulsionsanlage, die von einer Hauptmaschine, vorzugsweise einem Dieselmotor oder einer Gas- oder Dampfturbine angetrieben wird und aus einem Hauptpropeller und einem fest installierten Tandempropeller zwischen Hauptpropeller und Ruder oder aus einem Hauptpropeller und einem Ruderpropeller besteht, der als Aktivruder mit oder ohne Düse oder aus einem schwenkbaren Propeller mit oder ohne Getriebegondel ausgeführt ist und zur Verbesserung des Gesamtpropulsionswirkungsgrades und der Ruderwirkung dauernd als Kontrapropeller mitläuft, dadurch gekennzeichnet, daß von einem an der Stirnseite der Hauptmaschine (2) oder im Wellenstrang (3) angeordneten Synchrongenerator (5) ein Teil der mechanischen Gesamtleistung abgenommen und über eine elektrische Welle einem Drehstrommotor zugeführt wird, der den Tandempropeller (6, 16) antreibt, daß beim Starten oder Umsteuern, abgeleitet vom Fahrtkommandogeber-Signal, der Generator (5) Stoßerregung erhält bis der Drehstrommotor gestartet oder umgesteuert ist und die Erregung auf U/f = konst geregelt wird.

2. Schiffs-Propulsionsanlage, die von einer Hauptmaschine, vorzugsweise einem Dieselmotor oder einer Gas- oder Dampfturbine angetrieben wird und aus einem Hauptpropeller und einem fest installierten Tandempropeller zwischen Hauptpropeller und Ruder oder aus einem Hauptpropeller und einem Ruderpropeller besteht, der als Aktivruder mit oder ohne Düse oder aus einem schwenkbaren Propeller mit oder ohne Getriebegondel ausgeführt ist und zur Verbesserung des Gesamtpropulsionswirkungsgrades und der Ruderwirkung dauernd als Kontrapropeller mitläuft, dadurch gekennzeichnet, daß von einem an der Stirnseite der Hauptmaschine (2) oder im Wellenstrang (3) angeordneten Synchrongenerator (5) ein Teil der mechanischen Gesamtleistung abgenommen und über eine elektrische Welle einem Drehstrommotor zugeführt wird, der den Tandempropeller (6, 16) antreibt, daß beim Starten oder Umsteuern der Anlaufvorgang des Drehstrommotors nach Aufnahme der Schiffsfahrt durch den Hauptpropeller und nach Erreichen der Schleppdrehzahl des Tandempropellers durch eine Stoßerregung des Generators der Drehstrommotor auf die Betriebsdrehzahl gefahren wird.

3. Schiffs-Propulsionsanlage, die von einer Hauptmaschine, vorzugsweise einem Dieselmotor oder einer Gas- oder Dampfturbine angetrieben wird und aus einem Hauptpropeller und einem fest installierten Tandempropeller zwischen Hauptpropeller und Ruder oder aus einem Hauptpropeller und einem Ruderpropeller besteht, der als Aktivruder mit oder ohne Düse oder aus einem schwenkbaren Propeller mit oder ohne Getriebegondel ausgeführt ist und zur Verbesserung des Gesamtpropulsionswirkungsgrades und der Ruderwirkung dauernd als Kontrapropeller mitläuft, dadurch gekennzeichnet, daß von einem an der Stirnseite der Hauptmaschine (2) oder im Wellenstrang (3) angeordneten Synchrongenerator (5) ein Teil der mechanischen Gesamtleistung abgenommen und über eine elektrische Welle einem Drehstrommotor zugeführt wird, der den Tandempropeller (6, 16) antreibt, daß beim Starten oder Umsteuern ein Teil-Leistungs-Frequenzumsetzer (20) den Drehstrommotor nach Erreichen einer vorgegebenen Fahrtstufe des Hauptpropellers (4) hochfährt und dann der Drehstrommotor direkt auf den Generator (3) synchronisiert bzw. geschaltet wird.

4. Schiffs-Propulsionsanlage, nach Anspruch 2 oder 3, dadurch gekennzeichnet, daß das Kabel (7) für die elektrische Welle durch Sicherungen (8) gegen Kurzschluß geschützt ist und bei Überlastung ein Stromwächter die Generatorentregung einleitet.

5. Schiffs-Propulsionsanlage nach Anspruch 1, 2 oder 3 und 4, dadurch gekennzeichnet, daß bei Anordnung eines Synchronmotors (15) über dem Ruderschaft, die Zuschaltung und das Synchronisieren beim Umsteuern bei einer Minimaldrehzahl ($0 < n < 7\,\%$) und abhängig von der Relativlage der Polradlage von Motor (15) und Generator (5) erfolgt.

6. Schiffs-Propulsionsanlage nach einem der Ansprüche 1 bis 5, dadurch gekennzeichnet, daß der Tandempropeller so angeordnet und im Durchmesser ausgelegt ist, daß er über den Strahlkontraktionskegel des Hauptpropellers (4) hinausragt und als aktives Leitrad arbeitet.

7. Schiffs-Propulsionsanlage nach einem der Ansprüche 3 bis 6, dadurch gekennzeichnet, daß der Anfahrfrequenzumrichter bei Manövrierbetrieb dauernd eingeschaltet bleibt und das Aktivruder um 90° schwenkbar ist.

8. Schiffs-Propulsionsanlage nach einem der Ansprüche 3 bis 6, dadurch gekennzeichnet, daß bei Revierfahrt oder bei Ausfall der Hauptmaschine (2) die Speisung des Aktivruders (6) durch Umschaltung über einen Frequenzumrichter (20) vom Bordnetz (19) aus erfolgt.

9. Schiffs-Propulsionsanlage nach einem der Ansprüche 3 bis 6, dadurch gekennzeichnet, daß der Hauptpropeller (4) durch eine Schaltkupplung (24) abgetrennt wird und daß die Hauptmaschine (2) dauernd das Bordnetz (19) über einen Wellengenerator (25) mit Frequenzumsetzer (27) und das Aktivruder (6) allein direkt oder über einen Frequenzumsetzer (28) betreibt.

10. Schiffs-Propulsionsanlage nach einem der Ansprüche 3 bis 6, dadurch gekennzeichnet, daß nur ein Wellengenerator (5) mit Frequenzumsetzer das Bordnetz dauernd speist, im Revier aber nach Abschalten des Hauptpropellers (4) von der Hauptmaschine (2) durch eine Schaltkupplung (24) den Ruderpropeller (6) und ggf. die Bugstrahlruder (31) dauernd mitspeist.

11. Schiffs-Propulsionsanlage nach einem der Ansprüche 1 bis 9, dadurch gekennzeichnet, daß bei einem Verstellpropeller als Hauptpropeller das Anfahren und Umsteuern des Ruderpropellers im Sinne eines Kontrapropellers durch einen Frequenzumrichter erfolgt, und daß die Sollsteigung des Hauptpropellers als Signal für die Drehrichtungsumkehr des Ruderpropellers dient.

12. Schiffs-Propulsionsanlage nach Anspruch 1, 2 oder 3, dadurch gekennzeichnet, daß bei Einsatz eines Gleichstrommotors anstelle eines Drehstrommotors das Anfahren und die Drehzahlregelung über gesteuerte Gleichrichter erfolgt.

13. Schiffs-Propulsionsanlage nach Anspruch 1, 2 oder 3, dadurch gekennzeichnet, daß bei Einsatz eines Gleichstrommotors anstelle eines Drehstrommotors das Anfahren und die Drehzahlregelung über Dioden mit Spannungsregelung des Synchrongenerators erfolgt.

**Claims**

1. Ship's propulsion system which is driven from a main machine, preferably a Diesel engine or a gas or steam turbine, and consists of a main propeller and a fixedly installed tandem propeller between main propeller and rudder or of a main propeller and a rudder which is constructed as active rudder with or without jet or as a pivotable propeller with of without gear nacelle and which for improvement of the overall propulsion efficiency and the rudder effect permanently co-rotates as counterpropeller, characterised thereby, that a part of the total mechanical output is taken off by a synchronous generator (5) arranged at the end face of the main machine (2) or in the shafting (3) and conducted by way of an electrical shaft to a polyphase alternating current motor which drives the tandem propeller (6, 16), that the generator (5), during starting and reversing and in derivation from the travel command generator signal, receives shock excitation until the polyphase alternating current motor has started or reversed and the excitation is regulated towards $U/f$ = constant.

2. Ship's propulsion system which is driven from a main machine, preferably a Diesel engine or a gas or steam turbine, and consists of a main propeller and a fixedly installed tandem propeller between main propeller and rudder or of a main propeller and a rudder which is constructed as active rudder with or without jet or as a pivotable propeller with or without gear nacelle and which for improvement of the overall propulsion efficiency and the rudder effect permanently co-rotates as counterpropeller, characterised thereby, that a part of the total mechanical output is taken off by a synchronous generator (5) arranged at the end face of the main machine (2) or in the shafting (3) and conducted by way of an electrical shaft to a polyphase alternating current motor which drives the tandem propeller (6, 16), that the starting operation of the polyphase alternating current motor, during starting and reversing and after take-up of the travel of the ship by the main propeller and after attainment of the towing rotational speed of the tandem propeller, comprises the polyphase alternating current motor being run up to the operating rotational speed through a shock excitation of the generator.

3. Ship's propulsion system which is driven from a main machine, preferably a Diesel engine or a gas or steam turbine, and consists of a main propeller and a fixedly installed tandem propeller between main propeller and rudder or of a main propeller and a rudder which is constructed as active rudder with or without jet or as a pivotable propeller with or without gear nacelle and which for improvement of the overall propulsion efficiency and the rudder effect permanently co-rotates as counterpropeller, characterised thereby, that a part of the total mechanical output is taken off by a synchronous generator (5) arranged at the end face of the main machine (2) or in the shafting (3) and conducted by way of an electrical shaft to a polyphase alternating current motor which drives the tandem propeller (6, 16), that a partial output frequency converter (20), during starting and reversing and after attainment of a predetermined travel stage of the main propeller (4), runs up the polyphase alternating current motor and the polyphase alternating current motor is then synchronised with or switched to the generator (3) directly.

4. Ship's propulsion system according to claim 2 or 3, characterised thereby, that the cable (7) for the electrical shaft is protected against short-circuit by fuses (8) and a current monitor initiates the generator de-energisation in the case of overload.

5. Ship's propulsion system according to claim 1, 2 or 3 and 4, characterised thereby, that in the case of the arrangement of a synchronous motor (15) above the rudder shaft, the switching-on and the synchronisation during reversing takes place at a minimum rotational speed ($0 < n < 7$ %) and in dependence on the relative position of the field pole position of motor (15) and generator (5).

6. Ship's propulsion system according to one of the claims 1 to 5, characterised thereby, that the tandem propeller is so arranged and designed in the diameter that it projects beyond the jet contraction cone of the main propeller (4) and operates as active guide wheel.

7. Ship's propulsion system according to one of the claims 3 to 6, characterised thereby, that the starting frequency inverter remains switched on permanently during manoeuvering operation and the active rudder is pivotable through 90°.

8. Ship's propulsion system according to one of the claims 3 to 6, characterised thereby, that in the case of travel in channels or on the failure of the main machine (2), the feeding of the active rudder (6) takes place from the on-board mains (19) through switching-over by way of a frequency inverter (20).

9. Ship's propulsion system according to one of the claims 3 to 6, characterised thereby, that the main propeller (4) is disengaged by a clutch (24) and that the main machine (2) permanently operates the on-board mains (19) by way of a shaft-mounted generator (25) with frequency inverter (27) and the active rudder (6) alone directly or by way of a frequency inverter (28).

10. Ship's propulsion system according to one of the claims 3 to 6, characterised thereby, that only one shaft-mounted generator (5) with frequency inverter feeds the on-board mains permanently, but in channels traffic also feeds the rudder propeller (6) and, in a given case, the bow jet rudder permanently after disengaging the main propeller (4) from the main machine (2) by a clutch (24).

11. Ship's propulsion system according to one of the claims 1 to 9, characterised thereby, that in the case of a variable pitch propeller as main propeller, the starting and reversing of the rudder propeller takes place in the sense of a counterpropeller through a frequency inverter and that the target pitch of the main propeller serves as signal for the reversal of the rotation of direction of the rudder propeller.

12. Ship's propulsion system according to claim 1, 2 or 3, characterised thereby, that on the use of a direct current motor in place of a polyphase alternating current motor, the starting-up and the regulation of rotational speed takes place through controlled rectifiers.

13. Ship's propulsion system according to claim 1, 2 or 3, characterised thereby, that on the use of a direct current motor in place of a polyphase alternating current motor, the starting-up and the regulation of rotational speed takes place through diodes with voltage regulation of the synchronous generator.

**Revendications**

1. Appareil propulsif de navire, entraîné par une machine principale, de préférence un moteur Diesel ou une turbine à gaz ou à vapeur, et constitué par une hélice principale et une hélice tandem fixe entre l'hélice principale et le gouvernail, ou par une hélice de gouvernail réalisée sous forme de gouvernail actif ou sans tuyère ou d'hélice pivotante avec ou sans nacelle de réducteur et entraînée en permanence en contre-hélice pour améliorer le rendement propulsif total et l'effet du gouvernail, ledit appareil étant caractérisé en ce qu'une partie de la puissance mécanique totale est prélevée par un alternateur synchrone (5), disposé sur la face frontale de la machine principale (2) ou dans la ligne d'arbres (3), puis transmise par un arbre électrique à un moteur triphasé qui entraîne l'hélice tandem (6, 16) ; et, lors du démarrage ou de l'inversion, l'alternateur (5) est excité par des impulsions dérivées du signal du transmetteur d'ordre, jusqu'à ce que le moteur triphasé démarre ou s'inverse et l'excitation soit réglée à U/f = constante.

2. Appareil propulsif de navire, entraîné par une machine principale, de préférence un moteur Diesel ou une turbine à gaz ou à vapeur, est constitué par une hélice principale et une hélice tandem fixe entre l'hélice principale et le gouvernail ou par une hélice principale et une hélice de gouvernail réalisée sous forme de gouvernail actif avec ou sans tuyère, ou d'hélice pivotante avec ou sans nacelle de réduction et entraînée en permanence en contre-hélice pour améliorer le rendement propulsif total et l'effet du gouvernail, ledit appareil étant caractérisé en ce qu'une partie de la puissance mécanique totale est prélevée par un alternateur synchrone (5) disposé sur la face frontale de la machine principale (2) ou dans la ligne d'arbres (3), puis transmise par un arbre électrique à un moteur triphasé qui entraîne l'hélice tandem (6, 16) ; et, lors du démarrage ou de l'inversion, le démarrage du moteur triphasé est assuré, après le début de la marche du navire, par l'hélice principale et, quand la vitesse de rotation en traînage de l'hélice tandem est atteinte, par une excitation de l'alternateur par impulsions.

3. Appareil propulsif de navire, entraîné par une machine principale, de préférence un moteur Diesel ou une turbine à gaz ou à vapeur, et constitué par une hélice principale et une hélice tandem fixe entre l'hélice principale et le gouvernail, ou par une hélice principale et une hélice de gouvernail réalisée sous forme de gouvernail actif avec ou sans tuyère ou d'hélice pivotante avec ou sans nacelle de réducteur et entraînée en permanence en contre-hélice pour améliorer le rendement propulsif total et l'effet du gouvernail, ledit appareil étant caractérisé en ce qu'une partie de la puissance mécanique totale est prélevée par un alternateur (synchrone) disposé sur la face frontale de la machine principale (2) ou dans la ligne d'arbres (3), puis transmise par un arbre électrique à un moteur triphasé qui entraîne l'hélice tandem (6, 16) ; et, lors du démarrage ou de l'inversion, un convertisseur de fréquence (20) à puissance partielle assure la montée en régime du moteur triphasé quand l'hélice principale (4) atteint une vitesse prédéterminée, puis le moteur triphasé est synchronisé avec et connecté directement à l'alternateur (5).

4. Appareil propulsif de navire selon une des revendications 2 ou 3, caractérisé en ce que des fusibles protègent le câble (7) de l'arbre électrique contre les courts-circuits et un contrôleur de courant désexcite l'alternateur en cas de surcharge.

5. Appareil propulsif de navire selon revendications 1, 2 ou 3 et 4, caractérisé en ce que, en cas de montage d'un moteur synchrone (15) au-dessus de la mèche, la connexion et la synchronisation lors de l'inversion s'effectuent à une vitesse de rotation minimale (0 < n < 7 %) et en fonction de la position relative des roues polaires du moteur (15) et de l'alternateur (5).

6. Appareil propulsif de navire selon une quelconque des revendications 1 à 5, caractérisé en ce que l'hélice tandem est disposée et son diamètre déterminé de façon qu'elle dépasse le cône de contraction du jet de l'hélice principale (4) et se comporte en roue distributrice active.

7. Appareil propulsif de navire selon une quelconque des revendications 3 à 6, caractérisé en ce que le convertisseur de fréquence de démarrage demeure branché en permanence pendant les manœuvres et le gouvernail actif peut pivoter de 90°.

8. Appareil propulsif de navire selon une quelconque des revendications 3 à 6, caractérisé en ce que pendant la navigation fluviale ou en cas de défaillance de la machine principale (2), l'alimentation du gouvernail actif (6) est assurée par le réseau de bord (19), par commutation à l'aide d'un convertisseur de fréquence (20).

9. Appareil propulsif de navire selon une quelconque des revendications 3 à 6, caractérisé en ce que l'hélice principale (4) est isolée par un embrayage (24) ; et la machine principale (2) alimente en permanence le réseau de bord (19) par l'intermédiaire d'un alternateur (25) de ligne d'arbres avec convertisseur de fréquence (27), ainsi que le gouvernail actif (6) seul, directement ou par l'intermédiaire d'un convertisseur de fréquence (28).

10. Appareil propulsif de navire selon une quelconque des revendications 3 à 6, caractérisé en ce que seul un alternateur (5) de ligne d'arbres à convertisseur de fréquence alimente en permanence le réseau de bord, mais, en navigation fluviale, alimente aussi en permanence l'hélice de gouvernail (6) et le cas échéant le gouvernail avant, quand un embrayage (24) a isolé l'hélice principale (4) de la machine principale (2).

11. Appareil propulsif de navire selon une quelconque des revendications 1 à 9, caractérisé en ce que, en cas d'emploi d'une hélice à pas variable comme hélice principale, le démarrage et l'inversion de l'hélice de gouvernail fonctionnant en contre-hélice sont assurés par un convertisseur de fréquence ; et le pas de consigne de l'hélice principale constitue le signal d'inversion du sens de rotation de l'hélice de gouvernail.

12. Appareil propulsif de navire selon une quelconque des revendications 1 à 3, caractérisé en ce qu'en cas d'emploi d'un moteur à courant continu au lieu d'un moteur triphasé, le démarrage et la régulation de vitesse de rotation s'effectuent à l'aide de redresseurs commandés.

13. Appareil propulsif de navire selon une quelconque des revendications 1 à 3, caractérisé en ce qu'en cas d'emploi d'un moteur à courant continu à la place d'un moteur triphasé, le démarrage et la régulation de vitesse de rotation s'effectuent à l'aide de diodes avec régulation de tension de l'alternateur synchrone.

Fig.1

$\eta_G = 97°/°$     $\eta_\Pi = 93°/°$

Fig. 2

$\eta_M = 0,975$

$\eta_G = 0,97$     $\eta_{Get} = 0,99$     $\eta_{Get} = 0,98$

Fig.3

## Fig. 4

## Fig. 5